# EUROPEAN PATENT APPLICATION

(11) **EP 1 143 369 A2**
(43) Date of publication of application: **10.10.2001**
(21) Application number: 01303310.5
(22) Date of filing: 06.04.2001
(51) Int. Cl.: G06F 17/60, G06F 17/30

(54) **Financial product information system**

(30) Priority: 06.04.2000 GB 0008446
(71) Applicant: Norwich and Peterborough Building Society, Peterborough, Cambs PE2 6WS (GB)
(72) Inventor: Barrett, Richard John, Lynch Wood, Peterborough PE2 6WZ (GB); Bullock, Matthew Peter Dominic, Lynch Wood, Peterborough PE2 6WZ (GB)
(74) Representative: Archer, Philip Bruce

(57) **Abstract**

A financial product information system comprising a computer system within which there is stored a library of information screens containing information on different aspects of various different financial products. The information screens are stored and arranged within the database in a structured way. Links (A-L) are provided between the various information screens. The links (A-L), which are arranged to be operated on by a means for accessing and displaying the information screens, are arranged to be operable to control access to the various information screens such that a user has to select a link (A-L) from a first information screen (2) to progress to the next information screen (4,8,20). At least one of the links arranged to be selectively operable so that the link (B,C) will only provide access to and display the next screen (4) once a specific previous screen or screens (4) have been viewed.

## Description

The present invention relates to an information system for providing financial product information to customers.

There is a large and increasing number of different financial products, and specifically investment products, offered by different financial institutions. Such products include, for example, cash savings accounts, equity investments, life assurance, unit trusts, pensions and tax free investments. Within each type of financial product there are also innumerable different detailed products with different features conditions, benefits opportunities and depending on the type of product, risk. Various different financial products and types of products can be combined in various schemes, and in particular in the UK in the form of Individual Savings Accounts (ISA). ISAs in themselves are also offered in various different forms and types.

Detailed information on each particular financial product and also on the different types of financial product is provided in order that customers can assess the different features, conditions, benefits, opportunities and any risks involved. With such a wide range of financial products offered by different competing institutions it will be appreciated that the amount of information is considerable. Customers can often be confused and swamped by the volume of information which in general with conventional means is simply provided en masse with separate information leaflets on each of the financial products and types of products, all of which are in different formats etc. It is important, yet a considerable challenge, to provide clear, concise information in a coherent, easy to comprehend manner to customers. With the volume and complexity of products, and so required details on the products, this is a considerable technical challenge. In addition the provision of clear information is also a regulatory requirement.

Certain types of financial products are "regulated" under the Financial Services Act 1986 ("FSA") and the Financial Services and Markets Act 2000 ("FSMA") in the United Kingdom. The FSA, FSMA and the regulatory bodies established thereunder require that certain types of financial product ("regulated products") are advertised, promoted and sold in a particular type of way. Financial Institutions and intermediaries offering or advising on regulated products must ensure that the terms of the FSA, FSMA and the rules of the appropriate regulatory body (the "Rules") are complied with.

The FSA, FSMA and the rules of the regulatory bodies require that specific information is given to customers with regard to the status of the financial institutions, member of staff or intermediary under the FSA, FSMA with whom they deal concerning regulated products etc. Under the FSA, FSMA and the Rules, "advice" on regulated products must only be given by suitably qualified persons. Some customers clearly require advice and yet others are content to make a decision whether or not they proceed to purchase a regulated product on the basis of information only. In most financial institutions and intermediary firms, there are a limited number of staff who are qualified to advise in any event. A larger number of staff may, however, be authorised to "introduce" customers to the financial institution offering the particular financial product in which the customer is interested. The customer may then either speak with a representative on behalf of the financial institution concerned or "buy" the product concerned without obtaining any advice. Under the rules, an introducer may generate leads for a financial institution offering regulated products, provide factual information regarding regulated produces and assist customers in completing application forms for regulated products.

A significant problem for financial institutions or intermediaries is ensuring that introducers do not give any advice as this is prohibited. It is also important that the financial institutions provide information concerning the regulated products that is correct and that any information required under the FSA, FSMA or the Rules to be given to customers is, in fact, given. Consequently, the use by financial institutions of introducers to sell regulated products, although having benefits in terms of efficiency, expense, and resources, does carry regulatory risk. Financial institutions must ensure that they have sufficient systems of control in respect of the activities of introducers and the information that they provide to customers.

A financial information intermediary system is disclosed in US 5,913,202. This is a relatively complex system in which a client provides detailed information which is used by the system to provide advice and identify suitable financial products. The system primarily collates detailed information from the client. Other computer systems have also been developed, for example SOCRATES and PLATO developed by Norwich Union and used by the applicant (Norwich and Peterborough Building Society). Again these systems are directed to collating information about a client to form a profile of the client which can then be used by an advisor to provide more detailed advice. As such these prior computer systems are tools for advisors to provide further advice, and cannot therefore be used by introducers. The systems are not directed to specifically the problem, or requirements, of providing financial product information itself, in a complete and specific manner and in accordance with for example various regulations. Nor do these systems address the previously mentioned problems.

It is therefore desirable to provide a system for providing financial product information which addresses the above described problems, consolidates and provides financial product information to both financial institutions and to intermediaries and to customers in a clear and structured and controlled manner complying with any relevant regulations relating to financial products and/or which offers improvements generally.

According to the present invention there is provided a system and method as defined in the accompanying claims.

In an aspect of an embodiment of the invention there is provided a financial product information system for providing financial product information to both staff of financial institutions (or intermediaries) and to customers in a clear, structured and controlled manner. The system comprises a computer system containing a library of information screens. The computer system includes a means for storing information, a user interface, and a means for accessing and displaying information to both the user and to customers. The library of information screens is stored within the means for storing information of the computer system. The information screens comprise menu screens, submenu screens and data screens, with the information and data screens containing specific detailed information on various financial products offered either by or through the financial institution or intermediary. The information screens also include programmed links which are operable by the means for accessing the information screens so that the display of a subsequent information screen is determined by the link on a previous information screen. The links are arranged to provide a structured and controlled means of accessing the information screens. At least one of the links from at least one of the information screens is arranged such that it is only operable and permits display of the information screen to which it links after a specific other link and information screen has been accessed and displayed.

In another aspect of an embodiment of the invention there is provided a financial product information system comprising a computer system within which there is stored a database of information screens containing information on different aspects of various different financial products. The information screens are stored and arranged within the database in a structured way. Links are provided between the various information screens and further submenu and main menu screens. The links which are arranged to be operated on by a means for accessing and displaying the information screens are arranged to be operable and control access to the various information screens with a user selecting a link from the current screen to progress to the next information screen. At least one of the links is arranged to be selectively operable so that the link will only provide access to the next screen once specific other screens have been viewed.

In a yet further aspect of an embodiment of the invention there is provided a method of consolidating and providing financial product information using a computer system comprising a means for storing data, a means for accessing the data, a user interface and a means for displaying data. The method comprises:
generating discrete information screens relating to individual aspects of a range of financial products,
storing the information screens in a structured way within the computer system,
providing links on each of the information screens which are recognised and operated by the means for accessing data so that the information screens are interlinked in a structured way depending upon the content of the information screens,
operating the means for accessing the information screens so that the information screens are accessed and displayed in an order dependent upon the programmed links on the information screens,
arranging at least one of the links to be selectively operable dependent upon whether a specific link and information screen has previously been accessed.

A further aspect of the present invention relates to a method of controlling access to at least two classes of information, which may be designated as category A and category B information. In the embodiment of the invention, the category A information is the information which the system is able to make available as permitted by the Financial Services Act and the category B information is the information as to which that Act requires that information be provided by relatively qualified advisers. The system of the embodiment enables a business organisation to achieve compliance with the statutory and/or regulatory provisions while employing personnel in association with computer systems, such personnel not needing to be fully qualified in terms of advice capability. In this manner, the personnel can provide or assist in providing or allowing the customer to gain access to the category A information (which does not require fully qualified advisors) and the potential customer can also be provided with an indication of the relatively restricted area of information (category B) in respect of which he or she can gain information only via a relatively qualified advisor. Thus, in this way, the system allows the employment of not yet fully qualified personnel in association with computer systems whereby the potential customer gains access to all that information which is not statutorily barred to him or her via that route and in addition is provided with an indication of the other areas which he or she may wish to know about and can then request such further information which can be provided at that time or later via relatively better qualified advisers.

The present invention will now be described by way of example only with reference to the following figures in which:
Figure 1 shows a schematic simplified flow chart showing the structured way in which the information, menu and submenu screens are linked via links and are displayable within a financial product information system according to the present invention;
Figures 2 to 6 show examples of various menus, submenus, and information screens of the financial product information system of figure 1, as would be seen by the user and the customer on the display of the computer system;
Figure 7 shows a schematic simplified flow chart, similar to figure 1, but of a financial product information system of a second embodiment of the present invention;
Figures 8 to 11 show examples of various menus, submenus, and information screens of the financial product information system of figure 7, as would be seen by the user and the customer on the display of the computer system.

The financial product information system comprises a conventional personal computer including hard drive, central processor, keyboard, VDU display, mouse etc. The computer is connected to an Intranet and suitable electronic storage means preferably located on a server of the Intranet. The computer is configured, via suitable software loaded onto the computer, to handle hypertext mark up language (html) files, and includes a suitable browser, for example Microsoft Internet Explorer or Netscape Navigator. The browser provides a means for accessing, processing and displaying html files on the computer display in response to user input though the mouse or keyboard and commands included within the html files. As such the computer is conventional and its details will not be described further.

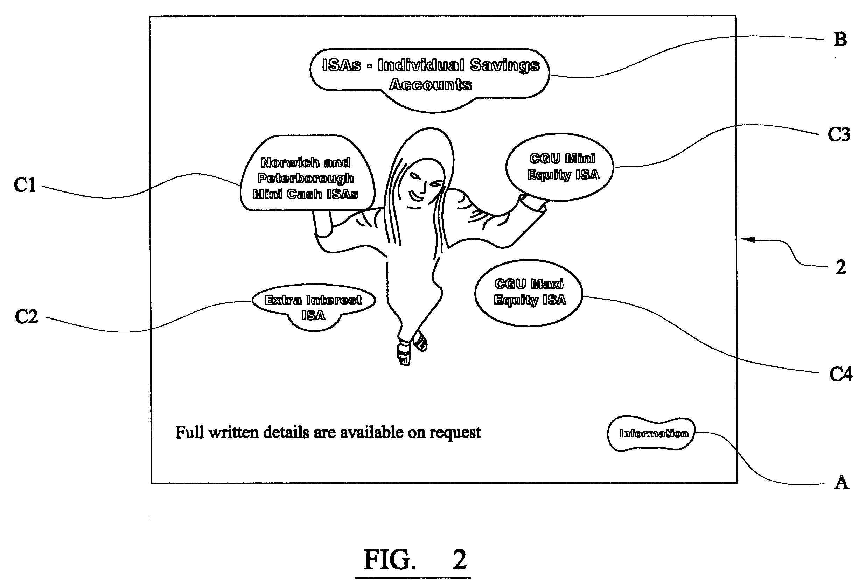

Information screens are created as html files and stored electronically on the storage means of the Intranet. The html files contain coding which when accessed and read by a browser will generate text, graphic images and/or animations on the computer display. The information screens contain and display specific details relating to various financial products, each information screen provides details on a particular aspect. The information screens/pages use both text descriptions, and graphics and are designed so as to provide the details of a particular aspect of the financial product in an easy to understand and clear way. Examples of the information pages when viewed on the computer display are shown in figures 2 to 6.

For each financial product there are a number of individual information screens describing various aspects of that product. The information screens are all stored within the storage means in a structured and consolidated way within a data structure. Information screens and files relating to a particular product are stored in individual folders. These folders are then grouped depending upon the type of financial products and stored in further folders relating to the different types of financial product.

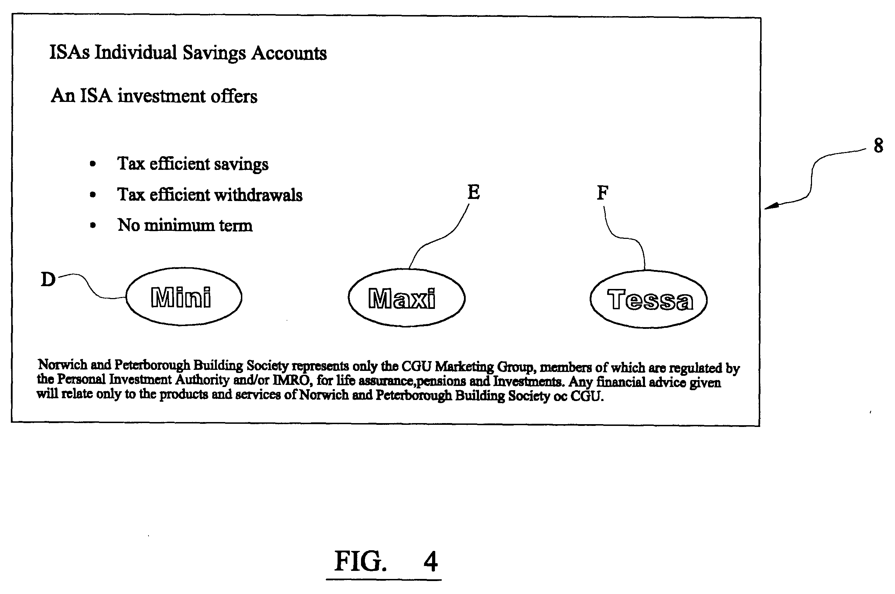

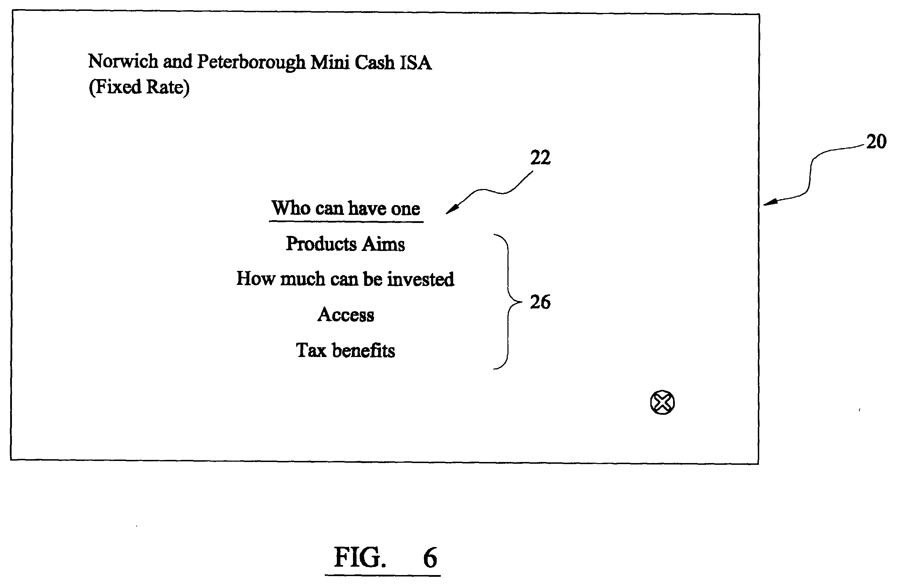

In a similar way to the information screens, menu screens are provided, again in html format. These provide details and listings of the various groupings and categories of information screens. An example of a main menu screen 2 is shown in figure 2 whilst examples of sub-menu screens are shown in figures 4 and 6 .

The information screens and menu screens include hypertext links to other specific related information screens. The computer system, specifically the browsers, recognises and uses these links to control which screens are displayed in response to a user selection from a previous screen.

The information screens are arranged within the computer system in a structured way and are interlinked in a structured and controlled manner which is coded within the screens via further index/menu screens and hypertext links on the screens. The computer system via the structured links between the various screens controls which screens are displayed and shown. A first menu screen 2 lists various categories of products/information which can be selected. Each of these categories is linked to the relevant information screens on these categories such that selecting one of these categories brings up and displays further information screens and/or sub-category menu screens on that category/product. Further links on the sub-category and/or information screens link in a similar way with further, more detailed, information screens. Once the most detailed information screen has been shown the system then returns to the first menu screen. In this way the system provides product information in a structured and controlled manner, with the structure and control determined by the fixed links between and arrangement of the menu and information screens.

A specific example of the system will now be described in more detail.

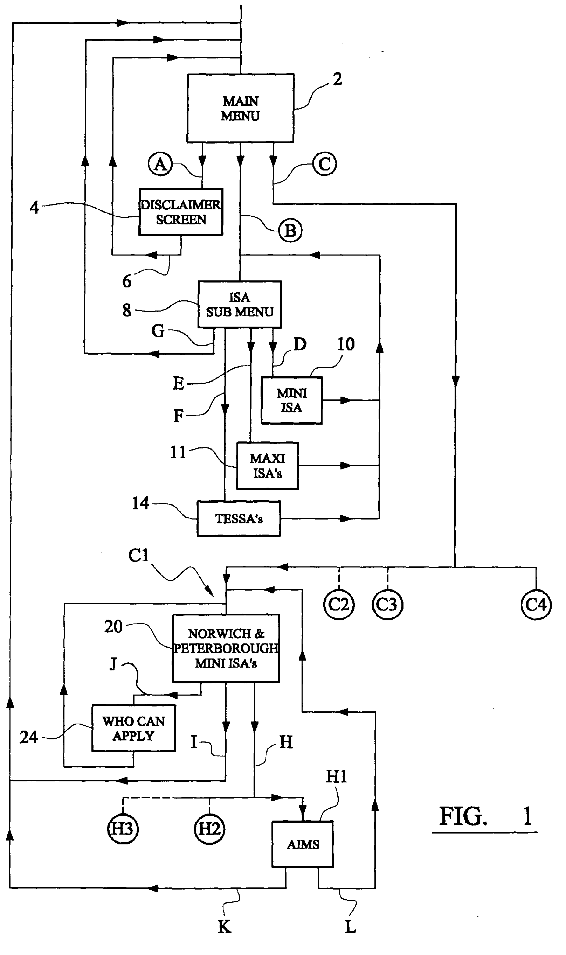

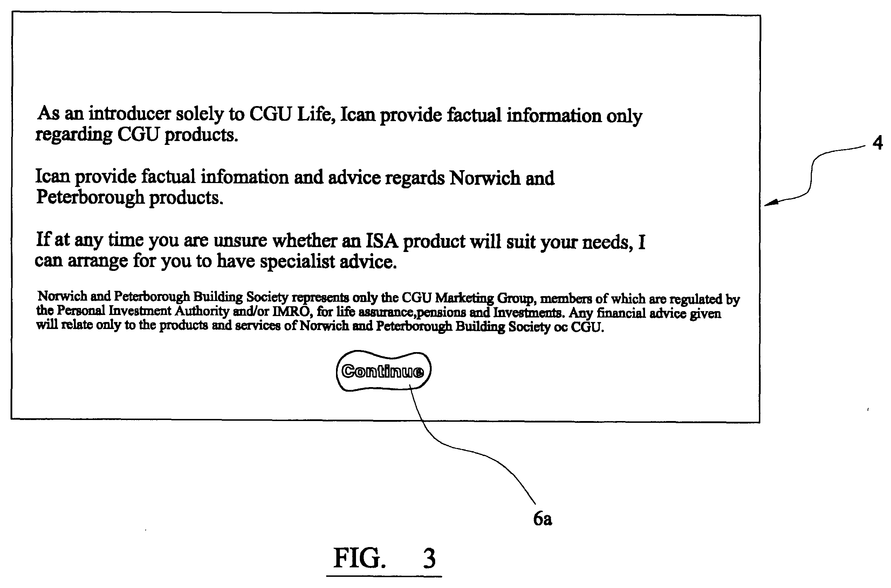

Referring to figure 1, which shows a simplified part flow chart showing how, from a user's perspective the information and menu screens 2,4,8,10,20 are accessed and interlinked. It should be noted though that the information screens 2,4,8,10,20 are generally stored within a different data structure. The first screen that is presented is a main menu screen 2. This screen 2 lists the contents of the financial product information system. As shown in figure 2, which is a screen shot of main menu screen 2 in this case the contents of this particular example of the system have been grouped under five main headings B,C1,C2,C3,C4. Option B relates to general information on ISAs and provides links to related information screens with general information on ISAs. Options C1 to C4 relate to, and provide links to, information screens containing more specific details on different types of ISA product. This menu screen 2 also includes an information option A. Each of the headings can be selected and hypertext links are provided to the further relevant screens. However the links A,B,C and screen 2 is arranged such that when first displayed to a user of the system, by the browser, only the information option A and link are operable and can be selected. Consequently the user can only proceed via the link on option A to the information screen 4 to which that option of the main menu screen 2 is linked. In this case option A proceeds to the obligation notification screen 4 which is shown in figure 3.

The notification screen 4 in this embodiment advises the customer that the member of the financial institution's or intermediary's staff using the system (the user) is an introducer only and can provide information only in relation to regulated products. The screen 4 also advises the customer that the member of staff concerned may provide both advice as well as information in relation to any products covered by the system which are not so regulated. By arranging the main menu screen 2 so that the only way to proceed is by selecting option A and viewing the notification screen 4 it is ensured that the required notification is displayed. At the same time however the user and the customer can see from the main menu screen 2 the range of differing products covered.

The notification screen may include a link 6 which is operated by selecting the continue button, which calls up and displays the main menu screen 2. This time however the system recognises that the user has already seen the notification screen 4, since the user has returned to the main menu screen 2, via the link from the disclaimer screen 4. As a result the system permits option B and the related link to this option to be selected. The other remaining options and links C1,C2,C3,C4 are still however inoperable.

By selecting option B and activating its related link the ISA sub-menu screen 8 is displayed. This includes basic general information on these particular types of financial product, namely ISA's and lists the categories and further options D,E,F (and related links) for subsequent related information screens 10,11,14 on ISAs. In this case however only the mini option D is selectable and operable. Again the only way that a user can continue is to select the mini option D and display the screen 10 that this option D links to.

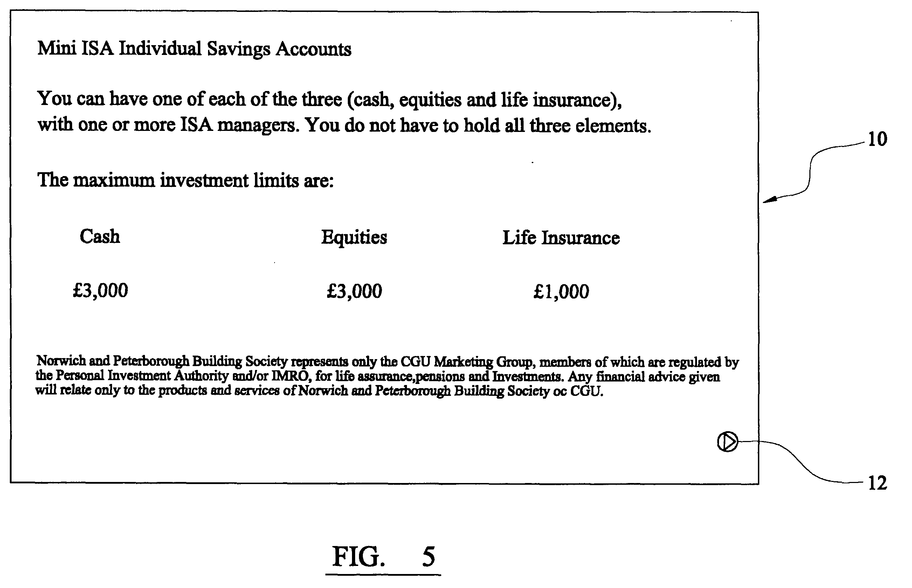

The information screen 10 on mini ISAs to which option D links is shown in figure 5. As can be seen this again provides important regulatory information on mini ISAs that is required to be given to the customer. The screen 10 also includes a button 12 which activates a link which returns to the ISA sub-menu information screen 8. This time however the system, via coding within the html file relating to this information screen 8, recognises that the main menu screen 8 has been accessed from the mini ISA screen 10 and that the mini option and link D has been previously selected and the information screens relating to that option have been displayed. As a result the maxi option E on the screen is now operable and selectable to link to the information screens 11 relating to maxi ISA's (not shown).

Once the maxi screens 11 have been displayed the system returns, via links from the maxi ISA screen 11, and displays the ISA sub-menu screen 8 in a similar way to in which the mini ISA screen 10 operated. This time however the Tessa option button F and link is operable and can be selected to display the Tessa information screens 14. Within the Tessa information screens 14 there is a selectable link which again returns to the ISA submenu screen 8.

When the ISA submenu screen 8 is now displayed following return to that screen 8 from the Tessa information screen 14 the system and browser recognises that the Tessa information screen 14 has already been displayed and the ISA submenu screen 8 is now configured so that all of the options D,E,F and related links are selectable. In addition a further option button (not shown) and link G is displayed and operable. When this option and link G is selected the system returns to and displays the main menu screen 2.

On return to and display of the main menu screen 2 from the ISA submenu screen 8 the system and browser recognises that the ISA submenu screen 8 and related links have been accessed. Consequently on the main menu screen 2 option button C, and specifically option buttons C1,C2,C3,C4, and links are now selectable to allow access to the more detailed information screens on these products.

With this arrangement of options and links on the main menu screen 2, with some of the options and links only operable once certain specific options and links have been selected, and the information screens viewed, the system ensures that certain information is displayed first before allowing other more detailed information screens to be accessed, viewed and displayed. In this case the system only allows progress once option A and its link and information screen 4 providing notification for regulatory purposes has been displayed. The system then only allows access to the more specific different financial product screens via links C1 to C4 once option and link B has been selected and the information screens 10,11,14 providing general information on ISA's have been displayed and viewed. In other words the option buttons and links on the main menu screen are arranged such that options and links C are only operable and selectable once option button and links B have been accessed, and in turn option B is only selectable and operable once option button A and its links have been selected and the relevant linked information screens displayed. In this way the system ensures that the required obligatory information is provided in relation to the particular information given out to the customer. Furthermore the only way to proceed through the system is via the links on the main menu screen 2. As a result the progress and display of information screens is controlled by the programming and provision of the links. By making the links and options only operable and selectable once certain other links have been accessed and displayed it can be ensured that specific information is displayed and viewed by both the user and the customer prior to further progress through the system and display of further information. Consequently it can be assured that the information required for regulatory purposes has been displayed and highlighted to the user. The user customer however, can see readily from the menu screen 2 the broad range of information that will be available once the user and the customer have progressed through the initial set information screens.

Option buttons and links C1 to C4 lead to and display further sub menu screens and from there provide option buttons and related link to further information screens on the specific financial products. These screens and option buttons operate in a similar way to the main menu screen 2 and related screens with certain options and links only being operable once specific links have been operated and information screens have been accessed and displayed. Since the information required for regulatory purposes has now been accessed and displayed, general details on ISAs now simply be provided with the user simply specifying what information they particularly want in a structured way. Consequently option buttons and links C1 to C4 are configured so that they can all now be accessed and are operable in any order. Access to these options and links C1 to C4 is not dependent on having previously accessed any further other options, links and related information screen. The users can therefore select which options they like in any order and obtain the information which they particularly want is a structured way through the further sub menus and information screens.

In the flow chart the further submenus and information screens under option buttons and links C2 to C4 have been shown only generally in the interests on brevity. Such submenus and information screens and links however are generally similar to the arrangement of the main menu screen 2 and also to the screens and links shown for option button C1 which will now be described. The exact arrangement however will depend upon the information screens that are required and have been produced to provide the information on the specific financial products to which the option and links relate.

As shown option button C1 relates to specific Norwich and Peterborough Mini ISAs. By selecting the relevant option button and link C1 from the main menu screen 2 a submenu screen 20 relating to the detailed information on this financial product is accessed and displayed. This screen 20, as presented to the user and to the customer on the computer display, is shown in figure 6. As can be seen the menu screen 20 lists various headings and categories of the further information screens providing specific details on the product that can be displayed. On this screen 20, and in a similar way to the main menu screen 2, only the first option 22 and link is operable. This is indicated by the fact that this option is underlined. This first option links to and provides access to information screens 24 which provide details of customers who can have these product. This is critical to the suitability of these products. Consequently the submenu screen and links are arranged so that this option 22 has to be selected and the information screens 24 relating to this option 22 have to be displayed. This is in a similar way to how the main menu screen 2 operates as described above. Once the Information screen 24 on who can have the product has been displayed the submenu screen 20 and system then permits access, and the options and links are operable to display and link, to the other options and links 26 and related information screens, shown as H₁, H₂, H₃ etc providing further details. From the specific product information submenu screen 20 there is a further option and link I which returns to the main menu 2. There is also an option and link K from the more detailed information screen H₁ on the product which allows the user to return to the main menu 2 so that they can select and obtain information on other financial products included within the system. There is also an option and link L which provides access to and links back to the submenu 20. Therefore from this submenu screen 20 the user can select the information which is required and can then return to either the main menu screen 2 to select information on different products or can return to the submenu screen 20 to select further information on that product. In this way, once certain important significant information (i.e who can have the product) has been displayed, the user can obtain the detailed information on the product that is required and the user and the customer may view it without having to view other information that is not wanted.

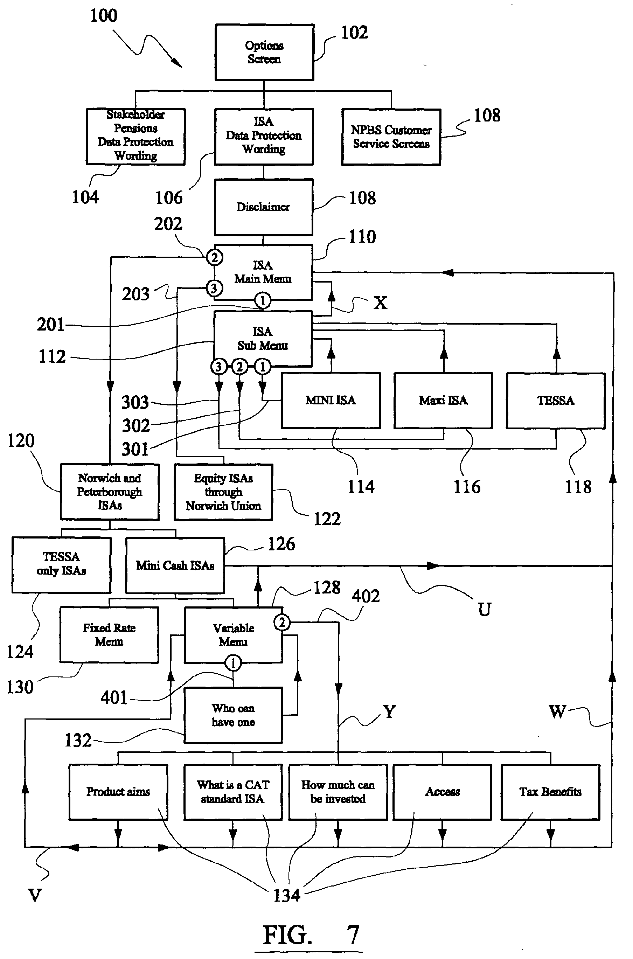

A second specific example of the system is illustrated in figures 7 to 11. This second system is generally similar to the one described above with reference to figures 1 to 6.

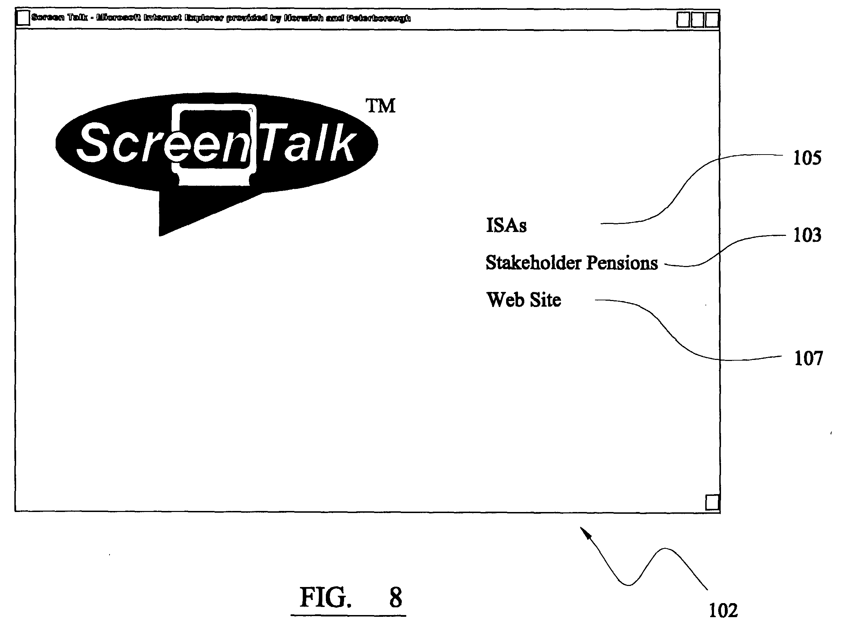

Referring to figure 7, which shows a simplified part flow chart showing and example schematic of how, from a user's perspective the information and menu screens are accessed and interlinked. In a similar manner to the previously described embodiment, the first screen 102 presented by the system 100 to a user is an options screen 102. A screen shot of the options screen 102 is shown in figure 8. As shown, this screen 102 lists various options, indicated by headings 104,106,108, for accessing further information screens which the system 100 can present, in this case relating to ISAs 106, Stakeholder pensions 104, both financial products, or access to a web site 108 for more general information. Within the system 100 each of the headings includes a related hypertext link to the respective further information screens containing the more detailed information. By clicking on a respective heading 106,104,108 the user accesses the further information screens. From this options menu screen all of the options 104,106,108 are available and can be selected.

For simplicity only the further screens and flow path through the linked screens relating to and accessed through the ISA option 106 have been shown in figure 7, and will be described below. The stakeholder pension 104 option though operates and is arranged in a similar manner with further information screens (not shown) are presented relating to stakeholder pensions. The web site option links to and presents further screens with more general information.

The ISA option 105 links to a first and second screens 106,108 containing obligatory regulatory information which must be presented relating to ISAs. These screens 106,108 are similar to screen 4 shown in figure 3. The first screen 106 includes a single link to the second screen 108, as indicated in figure 7 such that the user has to progress from the first screen 106 to the second 108 and therefore view the obligatory information contained on both screens 106,108.

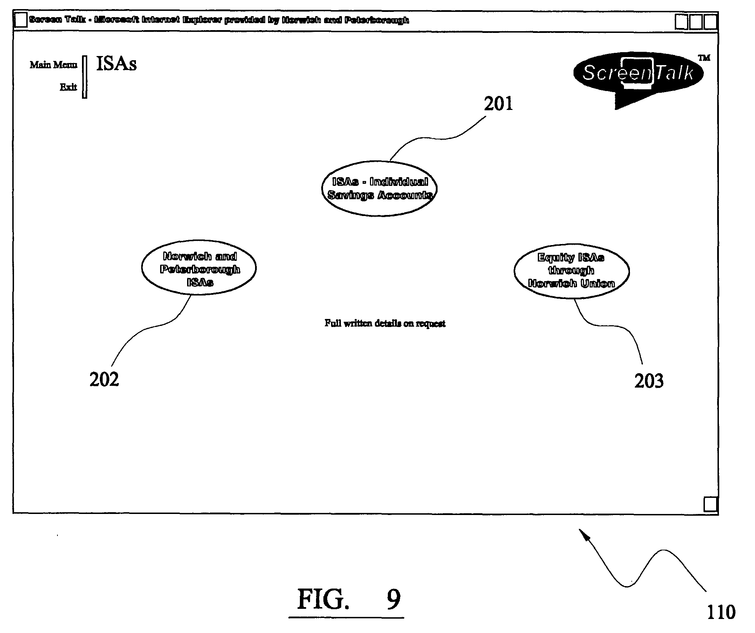

From the two obligatory screens 106,108 there is a link to an ISA main menu screen 110, shown in figure 9. This screen 110 contains title headings of further information screens relating to ISAs and specific ISA products. Each of these headings 201,202,203 on screen 110 includes a hypertext link to the further respective information screens. However when this screen 110 is accessed only option 201 is initially operable with the links from the other options 202,203 being disabled. Consequently a user can only select option 201 to proceed further. A user however on accessing this screen 110 can though see generally what other information they can obtain through the system 100.

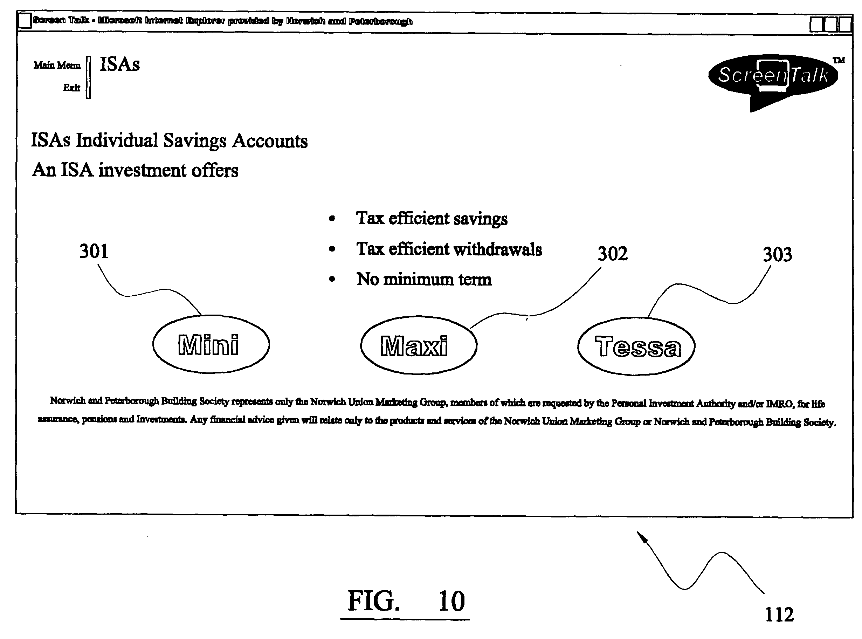

Upon selecting option 201 from the ISA main menu screen 110 the hypertext link associated with that option links to and presents a ISA submenu screen 112, shown in figure 10. This screen 112 provides some further general information on ISAs and further options 301,302,303 and headings relating to different types of ISA's (Mini, Maxi and Tessa) are presented. Again and as with the main menu screen 110 only one of these options (in this case option 201 relating to Mini ISA's) is though operable when the ISA sub menu screen 112 is first accessed. Therefore to proceed and view further information screens a user must select this option 201 and view the Mini ISA screen 114 with details on Mini ISA's.

From the Mini ISA screen 114 (or screens) the user is returned via links back to the ISA sub menu screen 112. This time however, and by suitable functionality embedded in the HTML coding for the ISA sub menu screen 112, it is recognised that the user has viewed and accessed the MINI ISA option 301 and Mini ISA screen, and so has viewed that information therein. As a result the Maxi ISA option 302 is now operable in addition to the Mini ISA option 301. The user can therefore now select to Mini ISA option to see the Mini ISA options again, or can proceed further and view the MAXI ISA screens 116 with information on Maxi ISA's by selecting the Maxi ISA option 302 and associated hypertext link 302.

From the Maxi ISA screen (or screens) 116 the user is returned to the ISA Sub menu screen 112. This time though all three options 301,302,303 are selectable and the user can select the Tessa option 303 and view the Tessa screen 118 with general obligatory information of Tessas.

In this way it is ensured that the obligatory general information, contained in the screens 114,116,118, on each of the different types of ISA are presented to the user as required before a user proceeds with viewing more specific details on the particular ISA products offered and shown on other information screens.

Once a user has selected all of the options 301,302,303, and so viewed all of the linked screens 114,116,118 from these options 301,302,303, they are returned via the ISA submenu screen 112 to the ISA Main menu screen 110, as indicated by link X in figure 7.

In a similar manner to with the ISA sub menu screen 112, the other options 202,203 and links, are now operable. These options 202,203 link to further information screens on particular ISA product being offered by different companies, in this case Norwich and Peterborough ISA's 120, and Equity ISAs through the Norwich Union 122.

It should be noted that the regulations do not require that details of all the products are presented. Consequently rather than with the ISA sub menu screen 112 in which the further options sequentially became operable, in this screen 110 both options 202 and 203 are operable once the user has viewed the first option 201, and the user can select either of these as they choose depending upon the information they require. Specifically the information screens to which these options 202,203 link relate to information on different products in the same class and it is not required that a customer/user view the details on both products. Therefore because it is not required, under the financial regulations, that a user be provided with detailed information on all of the products (which are provided via options 202,203), the system 100 allows a user to choose whether or not to view this information and so both options 202,203 are operable. By contrast with the ISA sub menu screen 112, and information screens to which it links, the regulations require that information on Mini, Maxi and Tessa ISA's are provided and hence the different control of the various options which are displayed and accessible provided by the system 100.

When a user is returned to the ISA Main menu screen 110 the ISA sub menu option 201, previously accessed, is also still operable and if desired a user can also return to the ISA submenu screen 112 and review the previously presented information screens 114,116,118.

The further information screens on the different ISA products offered are arranged in a similar manner to the previous screens and present via a series of linked screens information to a user on the various products offered and their specific features. Where obligatory information has to be provided this is done in a similar manner to with the ISA main menu 110 and ISA sub menu, by using links which are only selectively operable once specific other links and information screens have been operated.

In figure 7 only the further screens of the system 100 relating to Norwich & Peterborough Mini cash ISAs have been shown in the interests of brevity and the Information screens on 'Equity ISAs though the Norwich Union' 122, and other information screens have only been shown generally. The other screens for the different products are through arranged in a similar manner with information on those products.

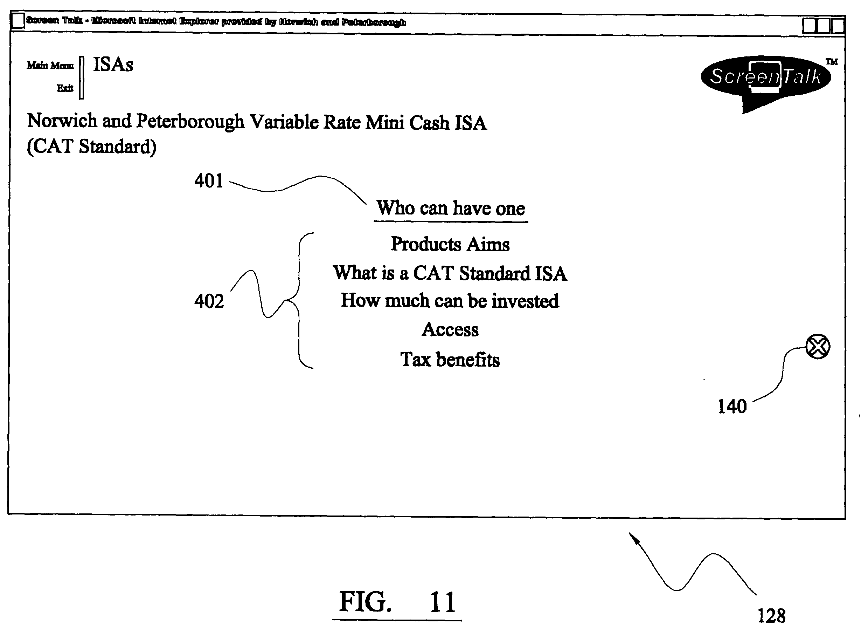

Considering, by way of example the 'Norwich & Peterborough Mini cash ISAs' and further screens providing further information on this product. A user having selected option 202 and information on 'Norwich and Peterborough ISA's' is presented with a general information screen on these products 120. From this general screen 120 there are options to information screens on 'Tessa only ISAs' 124 and 'Mini cash ISA's' 126. Again only the further screens from the Mini cash ISAs are shown in figure 7. From the Mini cash ISA screen 126 there are links to information screens 130,128 on the different types of Mini cash ISAs offered, specifically 'Fixed rate' and 'Variable mini cash' ISAs respectively. These screens 124,126 provide access to further information on these different types of product via further screens if required. Again only the further screens on 'Variable mini cash ISAs' are shown in figure 7. A screen shot of the Variable menu screen 128 is shown, by way of example in figure 11.

The variable menu screen 128 includes headings and links 401,402 for further information screen 132, 134. However it is required that details of who can have such a product are presented. Therefore, as with the ISA Main menu 110, this variable menu screen 128 is configured so that only the option and link 401 to the 'who can have one' screen 132 is operable when the variable menu screen 128 is first accessed. This ensures that a user views the 'who can have one' screen 132 and is presented with this information contained on this screen 132 before they are presented with the other information under the other option headings 402. Once a user has selected the 'who can have one' information option 401 and viewed the linked screen 132 with the relevant information the user is returned Y to the variable menu screen 128 where the other options then become operable and the user can then select the other options 402 and information screens 134.

From the various screens links U,V W, selectable from buttons on the respective screens, are also provided to return to the various relevant previous menu and information screens. These allow a user of the system 100 to return to the other screens and select other options and other information screens and gain access to the information contained on those screens.

In both of the above described systems to ensure that access to the various information screens is via the programmed links defined in the screens certain functions of the browsers are disabled when configured to be used with the financial product information system. In particular the PRINT, BACK and FORWARD functions are disabled. This is done using HTML software coding relating to the information, menu and submenu screens.

The software coding for controlling the display of text and graphics, the related links on the screens in both the abvoe described systems, and their interoperability with the browser used to view them is carried out using standard web based type html coding which is well known to those skilled in the art. It is the achievement of the functionality of the financial product information system of the invention as described above and provision of such a configured system that is believed to be a novel aspect of the invention.

With the above described systems, financial product information is provided to the user and to the customer in a structured away which is determined and controlled by the arrangement of the information screens. The vast amount of information can therefore be accessed and displayed in a convenient and more comprehensible way. Furthermore since, once certain obligatory information has been provided the user determines the information to which they may then gain access. The user can therefore easily obtain the information and level of detail which they require without having to sift through unwanted information.

Furthermore the information provided is determined by the content of the information screens and the programmed links. The information provided is therefore controlled and it is clearly known what information has been provided to the user and to the customer. In this way it can be assured that the required regulatory information has been provided since this is an obligatory screen (or screens) that must be viewed in order to progress through the system. By relying on the system to provide the information in a controlled specific manner the risk that advice is inadvertently provided in respect of those products, which would be contrary to regulations under the Financial Service Act is thereby reduced.

In addition since the information screens are stored electronically, preferably on a central Intranet server they can be centrally and quickly updated and amended as required. This will ensure that following an update it is certain that the most current information is always provided.

Using the functionality of financial product information system financial information relating to a large range of financial products can be collated and its display to the user and to the customer in a structured and controlled way with access and presentation of specific information being determined and controlled by the system in order to ensure compliance with requirements.

It will be appreciated that the system and core functionality of the system can be extended to cover a varied range of information on a range of financial products. In this way such information is simply collated into further or alternative information and menu screens which are interlinked using specific links. In particular for example the system can be used to provide pension information, which is also regulated and where it is important that a customer is provided with certain specific information concerning the products.

## Claims

1. A financial product information system for providing financial product information comprising a computer system comprising a storage means, a user interface, a display means, a library of information screens for display by said display means and stored within the storage means, and a means for accessing and controlling the display of said information screens on said display means; the information screens containing specific detailed information on various financial products and including programmed links which are operable to cause the display of a subsequent information screen, at least one of the links from at least one of the information screens arranged such that it is only operable and permits display of a subsequent information screen to which it links once a specific other link and information screen has been displayed.

2. A financial product information system comprising a computer system within which there is stored a library of information screens containing information details relating to different aspects of various different financial products, the information screens are stored and arranged within the database in a structured way, links are provided between the information screens, the links which are arranged to be operated on by a means for accessing and displaying the information screens are arranged to be operable to control access to the various information screens such that a user has to select a link from the current screen to progress to the next information screen, with at least one of the links arranged to be selectively operable so that the link will only provide access to the next screen once specific other screens have been viewed.

3. A financial product information system as claimed in claim 1 or 2 in which the information screens comprise menu screens, submenu screens and data screens.

4. A financial product information system as claimed in any preceding claim in which the system is of a web based type and the information screens comprise web pages and the links are of a web based type.

5. A financial product information system as claimed in claim 4 in which the information and links are defined in HTML or similar language.

6. A financial product information systems as claimed in claim 5 in which the links comprises hypertext links.

7. A financial product information systems as claimed in any one of claims 4 to 6 comprising a web browser for accessing and displaying the information screens.

8. A financial product information system as claimed in any preceding claim in which the computer system comprises part of a computer network and the information screens are stored on a central server.

9. A method of consolidating and providing financial product information using a computer system comprising a means for storing data, a means for accessing the data, a user interface and a means for displaying data, the method comprising:
generating discrete information screens relating to individual aspects of a range of financial products,
storing the information screens in a structured database within the computer system,
providing links on each of the information screens which are recognised and operated by the means for accessing data so that the information screens are interlinked in a structured way depending upon the content of the information screens,
operating the means for accessing the information screens so that the information screens are accessed and displayed in an order dependent upon the programmed links on the information screens,
arranging at least one of the links to be selectively operable dependent upon whether a specific link and information screen has previously been accessed.

10. A method of controlling access to at least two classes of information relating to financial products, namely category A and category B comprising:
a) providing a database system containing information relating to category A and titles or an indication of the subject matter of the information of category B;
b) providing also in said database data or an obligatory information notice relating to one or both of said categories of information;
c) providing a control system for said database whereby a user can only gain access to said category A information having previously gained access to a display of said information notice, and said user can also gain access to said titles or an indication of the subject matter of the information of said category B; and
d) said information of category B being related to said data or information notice in a regulatory manner whereby a user can determine that such information concerning category B is affected by such notice and may be available via another route.
